# FASCICULE DE BREVET EUROPEEN

(11) **EP 4 541 664 B1**
(45) Date de publication et mention de la délivrance du brevet: **10.06.2026**
(21) Numéro de dépôt: 24200336.6
(22) Date de dépôt: 13.09.2024
(51) Int. Cl.: B60R 13/04

(54) **ENJOLIVEUR POUR PEAU DE PARE-CHOCS DE VÉHICULE AUTOMOBILE**
ZIERKAPPE FÜR STOSSFÄNGERHAUT EINES KRAFTFAHRZEUGS
TRIM FOR MOTOR VEHICLE BUMPER SKIN

(30) Priorité: 17.10.2023 FR 2311218
(43) Date de publication de la demande: 23.04.2025
(73) Titulaire: Stellantis Auto SAS, 78300 Poissy (FR)
(72) Inventeur: BOUDAN, JULIEN, 91210 DRAVEIL (FR); ROCHA, DAVID, 95130 FRANCONVILLE (FR); PERON, RODOLPHE, 95220 HERBLAY (FR)
(74) Mandataire: BCIP

(56) Documents cités:
- CN-A- 110 341 636
- DE-A1- 102016 113 880

## Description

### [Domaine technique]

La présente invention concerne d'une manière générale les peaux de pare-chocs pour véhicules automobiles. Elle vise en particulier un enjoliveur pour une telle peau de pare-chocs.

### [Technique antérieure]

Les pare-chocs avant des véhicules automobiles comportent classiquement une peau extérieure classiquement réalisée à partir d'une ou plusieurs pièces venues chacune de moulage dans un matériau thermoplastique.

Pour des raisons de style, il est connu de rapporter sur cette peau extérieure de pare-chocs des pièces décoratives dénommées couramment sous le terme d'enjoliveurs et réalisées également en matière plastique, de sorte à ne pas trop alourdir la masse du véhicule.

Ces enjoliveurs viennent classiquement s'emboîter au moins partiellement par correspondance de forme dans des empreintes ménagées sur la face extérieure de la peau de pare-chocs.

Chaque enjoliveur est généralement fixé à la peau de pare-chocs par l'intermédiaire de pattes agencées sur cet enjoliveur et coopérant par encliquetage avec des fentes correspondantes ménagées dans la peau de pare-chocs.

La gestion des jeux entre les bords de ces enjoliveurs et ceux des empreintes correspondantes de la peau de pare-chocs s'avère primordiale pour l'esthétique de la face avant du véhicule.

Dans le cas d'enjoliveurs de grande longueur s'étendant transversalement le long d'au moins la majeure partie de cette peau de pare-chocs, les dispersions dimensionnelles dues aux tolérances normales de fabrication empêchent malheureusement d'obtenir une gestion optimale de ces jeux au niveau des extrémités latérales externes de ces enjoliveurs, ce qui nuit au rendu esthétique de l'avant du véhicule et au niveau de qualité perçue par les clients.

Le document DE 10 2016 113 880 A1 divulgue un exemple d'enjoliveur pour pare-chocs de véhicule automobile.

### [Exposé de l'invention]

La présente invention vise donc à améliorer la situation.

Elle propose à cet effet un enjoliveur pour peau de pare-chocs de véhicule automobile prévu pour reposer fixement contre la face extérieure de ladite peau de sorte à s'étendre transversalement le long d'au moins la majeure partie de cette peau ;
caractérisé en ce qu'il est constitué de deux pièces en matière plastique allongées transversalement et prévues pour être rapportées fixement l'une après l'autre en bout à bout contre la face extérieure de ladite peau, chaque dite pièce comprenant une portion latérale interne à section en U dont la concavité est tournée vers ladite peau et comprenant une façade frontale bordée par deux rebords supérieur et inférieur, l'une desdites pièces comprenant en outre un tenon s'étendant dans le prolongement côté interne de sa portion latérale interne, en retrait vers l'intérieur vis-à-vis du bord interne de cette dernière, et sur lequel l'extrémité latérale interne de la portion latérale interne de l'autre desdites pièces est prévue pour venir s'emboîter à chevauchement, de sorte que les bords internes des portions latérales internes de ces deux pièces viennent se situer en vis-à-vis l'un de l'autre.

De par sa constitution en deux pièces, l'enjoliveur selon l'invention permet de en jouant sur l'écartement entre les bords internes des portions latérales internes de ces deux pièces, d'ajuster de manière optimale la position des extrémités latérales externes de ces pièces vis-à-vis de la peau de pare-chocs.

Par ailleurs, la présence du tenon permet d'obtenir un effet « tuilage » dissimulant en grande partie le jeu latéral pouvant apparaître entre les bords internes des portions latérales internes après la mise en place des deux pièces sur la peau de pare-chocs.

Selon des caractéristiques préférées dudit enjoliveur selon l'invention :
- les façades des portions latérales internes desdites pièces comprennent chacune des moyens permettant de rapporter fixement, à cheval contre ces dernières, une plaque de police ou un support pour une telle plaque de police, de sorte que ladite plaque ou ledit support recouvre la zone de jonction entre ces deux façades ;
- lesdits moyens ménagés sur la façade de chaque dite portion latérale interne comprennent au moins un pré-perçage destiné à être traversé par un organe de fixation tel qu'un rivet ou une vis ;
- lesdits moyens ménagés sur la façade de chaque dite portion latérale interne comprennent au moins une fenêtre d'accès permettant à un organe de fixation de traverser ledit enjoliveur et de venir se fixer sur ladite peau de pare-chocs ;
- les portions latérales internes desdites pièces comprennent chacune en partie basse, au moins un orifice permettant l'évacuation de l'eau pouvant s'infiltrer dans leur volume intérieur ;
- chaque dite pièce présente au moins une ouverture de passage pour le faisceau d'un capteur d'un dispositif d'aide à la conduite ;
- lesdites pièces sont conformées de manière symétriquement identique vis-à-vis d'un plan longitudinal vertical de symétrie, à l'exception de leur extrémités internes respectives ; et/ou
- chacune desdites pièces comporte plusieurs pattes prévues pour venir s'insérer à encliquetage dans des fentes ménagées dans ladite peau de pare-chocs de sorte à permettre la fixation de ces pièces sur cette peau.

L'invention vise également sous un second aspect, un véhicule automobile comportant une peau de pare-chocs et un tel enjoliveur rapporté fixement contre la face extérieure de cette peau.

Ce véhicule comporte également de manière avantageuse une plaque de police ou un support pour une telle plaque de police rapporté fixement à cheval contre les façades des portions latérales internes desdites pièces, de sorte que ladite plaque ou ledit support recouvre la zone de jonction entre ces deux façades.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue éclatée en perspective de trois quart avant d'un enjoliveur pour peau extérieure de pare-chocs de véhicule automobile selon l'invention ;
- [Fig 2] est une vue éclatée en perspective de trois quart arrière de l'enjoliveur pour pare-chocs de la figure 1 ;
- [Fig 3] représente une vue en perspective de trois quart avant d'une peau extérieure de pare-chocs avant de véhicule automobile destinée à recevoir l'enjoliveur de la figure 1 ;
- [Fig 4] est un agrandissement illustrant le montage par emboitement à chevauchement des portions latérales internes des deux pièces constitutives de l'enjoliveur de la figure ;
- [Fig 5] représente une vue en perspective de trois quart avant du sous-ensemble constitué par le pare-chocs avant de véhicule automobile de la figure 3 et l'enjoliveur de la figure 1 rapporté fixement par encliquetage sur ce pare-chocs avant ; et
- [Fig 6] est une vue en section de la partie centrale du sous-ensemble de la figure 5, prise selon un plan de coupe horizontal traversant la zone de jonction entre les deux pièces de l'enjoliveur de la figure 1.

### [Description détaillée]

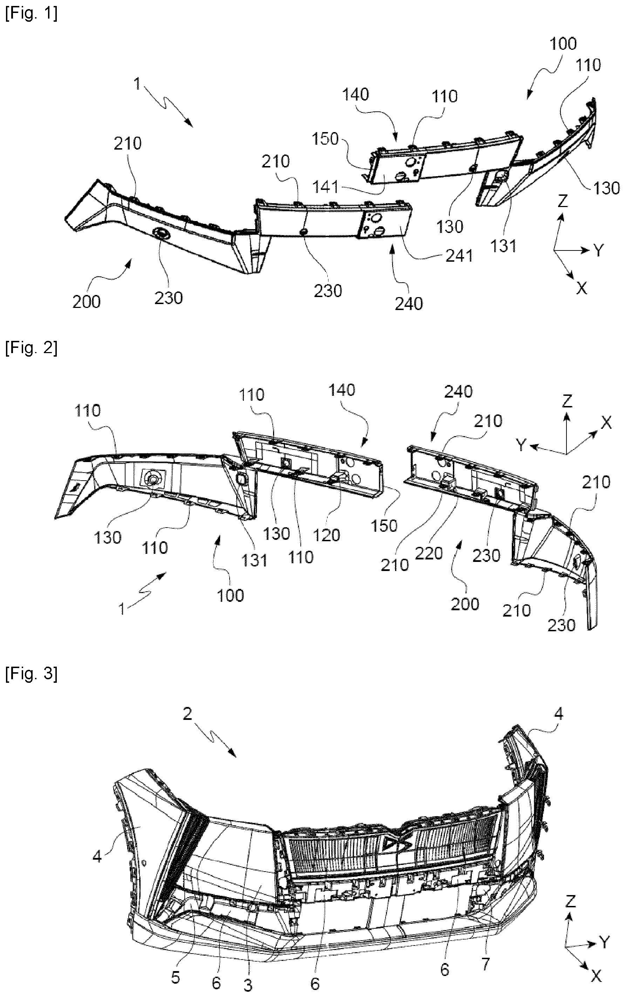

Les figures 1 et 2 montrent un enjoliveur 1 selon l'invention prévu pour être monté sur une peau extérieure de pare-chocs avant 2 de véhicule automobile représentée seule sur la figure 3, ce sous-ensemble une fois assemblé étant lui-même destiné à être monté sur la structure de caisse non représentée de ce véhicule.

On définit par rapport à cet enjoliveur 1 et à cette peau de pare-chocs avant 2 dans leur configuration normale de montage sur le véhicule, un repère orthogonal XYZ comprenant trois axes perpendiculaires deux à deux, à savoir :
- un axe X, définissant une direction longitudinale, horizontale, parallèle au sol et confondu avec la direction générale de déplacement du véhicule
- un axe Y, définissant une direction transversale, horizontale, également parallèle au sol et qui avec l'axe X définit un plan XY horizontal, et
- un axe Z, définissant une direction verticale, perpendiculaire au sol ainsi qu'au plan XY horizontal.

Dans la suite de la description et en référence au repère défini ci-dessus, les termes « longitudinal » ou « longitudinalement » feront référence à une direction parallèle à l'axe X, les termes « transversal » ou « transversalement » feront référence à une direction parallèle à l'axe Y, et les termes « vertical » ou « verticalement » feront référence à une direction parallèle à l'axe Z.

D'autre part et par convention, les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction horizontale.

Les termes « externe » et « interne » seront quant à eux utilisés pour définir la position relative d'un élément par référence au plan longitudinal vertical médian du véhicule. L'élément le plus proche de ce plan sera ainsi qualifié d'interne par opposition à l'autre élément plus éloigné de ce même plan qui sera quant à lui qualifié d'externe.

Enfin, l'utilisation du terme « sensiblement » indiquera qu'un léger écart est admis par rapport à une position ou disposition nominale prédéterminée, tout en restant inclus dans le cadre de l'invention. Par exemple, « sensiblement vertical » indiquera qu'un écart de l'ordre de 10° à 20° par rapport à une orientation strictement verticale est admis dans le cadre de l'invention.

Réalisée dans une ou plusieurs pièces venue(s) de moulage à partir d'un polymère thermoplastique, renforcé éventuellement en fibres naturelles et/ou synthétiques, la peau extérieure de pare-chocs 2 représentée sur la figure 3 comprend classiquement une partie centrale avant ou bouclier 3 et deux parties latérales ou crosses 4 prolongeant les extrémités latérales du bouclier 3 vers l'arrière de sorte que cette peau 2 présente en vue de dessus sensiblement une forme de U ouvert vers l'arrière.

Comme on peut le remarquer sur la figure 3, cette peau extérieure de pare-chocs 2 présente une empreinte d'accueil 5 pour l'enjoliveur 1 s'étendant sur transversalement sur l'ensemble de la longueur de son bouclier 3 et présentant un plan longitudinal vertical de symétrie confondu avec le plan longitudinal vertical médian du véhicule.

En référence aux figures 1 et 2, l'enjoliveur de pare-chocs avant 1 selon l'invention est constitué de deux pièces 100, 200 en matière plastique allongées transversalement, prévues pour être rapportées fixement par encliquetage l'une après l'autre en bout à bout contre la face extérieure de la peau de pare-chocs 2, en venant s'emboîter par correspondance de forme dans l'empreinte d'accueil 5.

Comme on peut le remarquer sur ces figures, les deux pièces 100, 200 sont conformées de manière symétriquement identique vis-à-vis d'un plan longitudinal vertical de symétrie, à l'exception notable de leurs extrémités internes respectives de raccordement qui seront décrites plus en détails dans la suite de cette description.

Venue de moulage à partir d'un polymère thermoplastique renforcé éventuellement en fibres naturelles et/ou synthétiques, chaque pièce 100, 200 se présente sous la forme d'un corps creux dont la concavité est tournée vers l'intérieur du véhicule (c'est-à-dire en direction de la peau de pare-chocs 2).

Chacune des pièces 100, 200 comporte plusieurs pattes 110, 210 prévues pour venir s'insérer à encliquetage selon un mouvement de translation longitudinale d'avant en arrière dans des fentes non visibles ménagées dans la peau de pare-chocs 2, de sorte à permettre la fixation de ces pièces 100, 200 sur cette peau 2.

Tel qu'illustré par la figure 2, la plupart de ces pattes de clipsage110, 210 saillent longitudinalement vers l'arrière depuis et le long du bord périphérique de chaque pièce 100, 200. Plusieurs pattes de clipsage 110, 210 saillent également longitudinalement vers l'arrière depuis des futs support 120, 220 s'étendant en relief depuis la face intérieure de chacune de ces pièces 100, 200.

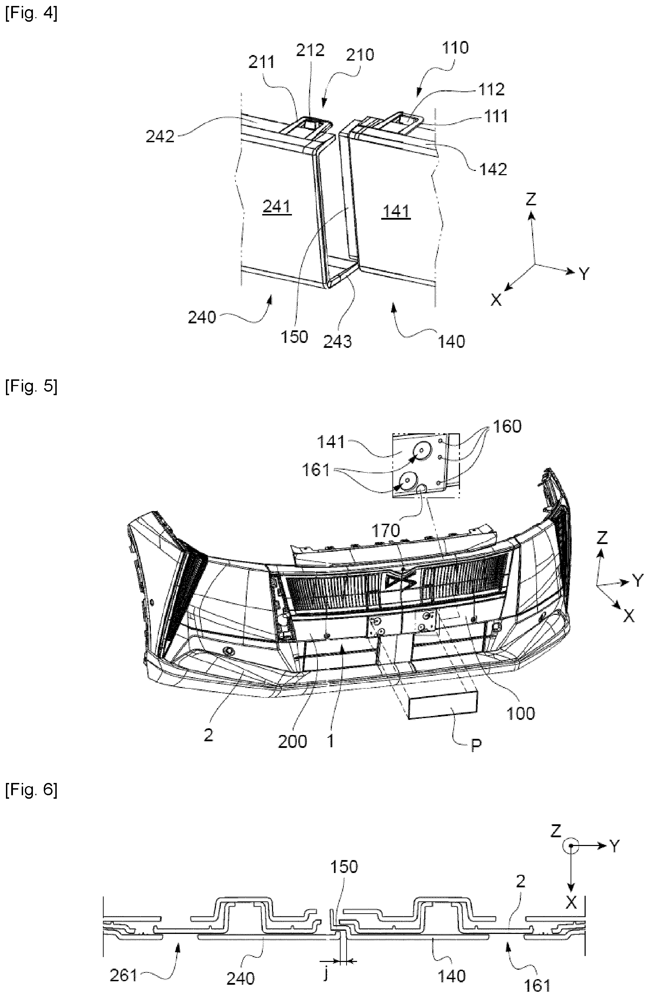

Comme cela est bien visible sur la figure 4, chaque patte de clipsage110, 210 présente une fenêtre 111, 211 logeant une dent 112, 212 raccordée au bord arrière de cette fenêtre 111, 211 et formée par une rampe inclinée s'étendant jusqu'à un redent de retenue.

Les dimensions des fentes d'accueil de ces pattes 110, 210 ménagées dans la peau de pare-chocs 2 sont adaptées pour offrir un léger jeu latéral de positionnement de chacune de ces pièces 100, 200 vis-à-vis de la peau de pare-chocs 2, de sorte à permettre un parfait positionnement des extrémités latérales externes de ces deux pièces 100, 200 vis-à-vis de celles de l'empreinte d'accueil 5.

Les pièces 100, 200 présentent également chacune de manière avantageuse au moins une ouverture de passage 130, 131, 230, 231, 232 pour le faisceau d'un capteur d'un dispositif d'aide à la conduite.

En l'espèce et tel qu'illustré par les figures 1 et 2, la pièce 100 (respectivement 200) présente deux ouvertures de passage 130 (respectivement 230) pour les faisceaux respectifs de capteurs (non représentés sur les figures) d'un dispositif d'aide au stationnement monté à l'avant du véhicule, ces deux ouvertures étant de préférence décalées transversalement l'une de l'autre d'au moins 250 millimètres et étant destinées à venir en regard de fenêtres correspondantes 6 ménagées dans la peau de pare-chocs 2 et visibles sur la figure 3.

On remarquera également que les ouvertures de passage 230 de la pièce 200 sont agencées de manière symétriquement identique à celles des ouvertures de passage 130 de la pièce 100.

La pièce 100 présente en outre une ouverture de passage 131 pour le faisceau d'une caméra (non représentée sur les figures) d'un dispositif de vision nocturne monté à l'avant du véhicule, cette ouverture de passage 131 étant destinée à venir en regard d'une fenêtre correspondante 7 ménagée dans la peau de pare-chocs 2 et visible sur la figure 3.

En référence à la figure 4, chaque pièce 100, 200 comprend une portion latérale interne 140, 240 à section en U dont la concavité est tournée vers la peau 2 et comprenant une façade frontale sensiblement plane 141, 241 bordée par deux rebords supérieur 142, 242 et inférieur 243 (le rebord inférieur de la portion 140 n'étant pas visible).

L'extrémité latérale interne de la pièce 100, destinée à être assemblée en premier sur la peau de pare-chocs 2, comprend en outre un tenon 150 s'étendant dans le prolongement côté interne de sa portion latérale interne 140, ce tenon 150 étant relié au bord interne de cette portion latérale interne 140 par un décrochement de sorte à s'étendre en retrait vers l'intérieur vis-à-vis de ce bord interne.

Lors de la mise en place de la pièce 200 sur la peau de pare-chocs 2 intervenant après celle de la pièce 100 et tel qu'illustré par cette figure 4, l'extrémité latérale interne de la portion latérale interne 240 de cette pièce 200 est prévue pour s'emboiter à chevauchement sur le tenon 150 de la pièce 100, de sorte que les bords internes des portions latérales internes 140, 240 de ces deux pièces 100, 200 viennent se situer en vis-à-vis l'un de l'autre (voir figure 6)

Comme illustré par les figures 5 et 6, la présence de ce tenon 150 permet ainsi d'obtenir un effet « tuilage » dissimulant en grande partie le jeu latéral j pouvant apparaitre entre les bords internes des portions latérales internes 140, 240 des pièces 100, 200.

Afin de rendre complément invisible la zone centrale de jonction entre les deux pièces 100, 200, les façades 141, 241 des portions latérales internes 140, 240 de ces pièces 100, 200 comprennent avantageusement chacune des moyens permettant de rapporter fixement une plaque de police P ou un support pour une telle plaque de police à cheval contre ces dernières, de sorte que cette plaque P ou ce support recouvre la zone de jonction entre ces deux façades 141, 241.

Ces moyens ménagés sur la façade 141, 241 de chaque portion latérale interne 140, 240 peuvent par exemple comprendre au moins un pré-perçage 160 destiné à être traversé par un organe de fixation tel qu'un rivet ou une vis.

Ces moyens peuvent également comprendre, sur chaque façade 141, 241 et en sus ou en remplacement du ou des pré-perçages 160, au moins une fenêtre d'accès 161, 261 (par exemple de forme circulaire) permettant à un organe de fixation de traverser l'enjoliveur 1 et de venir se fixer sur la peau de pare-chocs 2.

Les portions latérales internes 140, 240 des pièces 100, 200 peuvent également comprendre chacune en partie basse au moins un orifice 170 permettant l'évacuation à l'extérieur du véhicule de l'eau ayant pu s'infiltrer dans leur volume intérieur, de sorte à éviter que cette eau s'écoule dans le radiateur du véhicule implanté en arrière de la peau de pare-chocs avant.

De nombreuses autres variantes sont également possibles et on rappellera à cet égard que l'invention ne se limite pas aux formes de réalisation décrites et représentées, mais englobe également toutes les variantes d'exécution à la portée de l'homme du métier. L'invention peut par exemple concerner également un enjoliveur de pare-chocs arrière de véhicule automobile.

## Revendications

1. Enjoliveur (1) pour peau de pare-chocs (2) de véhicule automobile prévu pour reposer fixement contre la face extérieure de ladite peau (2) de sorte à s'étendre transversalement le long d'au moins la majeure partie de cette peau (2) ;
**caractérisé en ce qu'**il est constitué de deux pièces en matière plastique allongées transversalement (100, 200) et prévues pour être rapportées fixement l'une après l'autre en bout à bout contre la face extérieure de ladite peau (2), chaque dite pièce (100, 200) comprenant une portion latérale interne à section en U (140, 240) dont la concavité est tournée vers ladite peau (2) et comprenant une façade frontale (141, 241) bordée par deux rebords supérieur (142, 242) et inférieur (243), l'une (100) desdites pièces (100, 200) comprenant en outre un tenon (150) s'étendant dans le prolongement côté interne de sa portion latérale interne (140), en retrait vers l'intérieur vis-à-vis du bord interne de cette dernière, et sur lequel l'extrémité latérale interne de la portion latérale interne (240) de l'autre (200) desdites pièces (100, 200) est prévue pour venir s'emboiter à chevauchement, de sorte que les bords internes des portions latérales internes (140, 240) de ces deux pièces (100, 200) viennent se situer en vis-à-vis l'un de l'autre.

2. Enjoliveur (1) selon la revendication 1, **caractérisé en ce que** les façades (141, 241) des portions latérales internes (140, 240) desdites pièces (100, 200) comprennent chacune des moyens permettant de rapporter fixement, à cheval contre ces dernières, une plaque de police (P) ou un support pour une telle plaque de police, de sorte que ladite plaque (P) ou ledit support recouvre la zone de jonction entre ces deux façades (141, 241).

3. Enjoliveur (1) selon la revendication 2, **caractérisé en ce que** lesdits moyens ménagés sur la façade (141, 241) de chaque dite portion latérale interne (140, 240) comprennent au moins un pré-perçage (160) destiné à être traversé par un organe de fixation tel qu'un rivet ou une vis.

4. Enjoliveur (1) selon l'une des revendications 2 ou 3, **caractérisé en ce que** lesdits moyens ménagés sur la façade (141, 241) de chaque dite portion latérale interne (140, 240) comprennent au moins une fenêtre d'accès (161, 261) permettant à un organe de fixation de traverser ledit enjoliveur (1) et de venir se fixer sur ladite peau de pare-chocs (2).

5. Enjoliveur (1) selon l'une des revendications 1 à 4, **caractérisé en ce que** les portions latérales internes (140, 240) desdites pièces (100, 200) comprennent chacune en partie basse, au moins un orifice (170) permettant l'évacuation de l'eau pouvant s'infiltrer dans leur volume intérieur.

6. Enjoliveur (1) selon l'une des revendications 1 à 5, **caractérisé en ce que** chaque dite pièce (100, 200) présente au moins une ouverture de passage (130, 230) pour le faisceau d'un capteur d'un dispositif d'aide à la conduite.

7. Enjoliveur (1) selon l'une des revendications 1 à 6, **caractérisé en ce que** lesdites pièces (100, 200) sont conformées de manière symétriquement identique vis-à-vis d'un plan longitudinal vertical de symétrie, à l'exception de leur extrémités internes respectives.

8. Enjoliveur (1) selon l'une des revendications 1 à 7, **caractérisé en ce que** chacune desdites pièces (100, 200) comporte plusieurs pattes (110, 210) prévues pour venir s'insérer à encliquetage dans des fentes ménagées dans ladite peau de pare-chocs (2) de sorte à permettre la fixation de ces pièces (100, 200) sur cette peau (2).

9. Véhicule automobile comportant une peau de pare-chocs (2) et un enjoliveur (1) selon l'une des revendications 1 à 8 rapporté fixement contre la face extérieure de cette peau (2).

10. Véhicule automobile selon la revendication 9, **caractérisé en ce qu'**il comporte également une plaque de police (P) ou un support pour une telle plaque de police rapporté fixement à cheval contre les façades (141, 241) des portions latérales internes (140, 240) desdites pièces (100, 200), de sorte que ladite plaque (P) ou ledit support recouvre la zone de jonction entre ces deux façades (141, 241).

## Patentansprüche

1. Zierkappe (1) für die Stoßfänger-Haut (2) eines Kraftfahrzeugs, die so angeordnet ist, dass sie fest an der Außenseite der genannten Haut (2) anliegt, sodass sie sich quer über zumindest den größten Teil der genannten Haut (2) erstreckt;
Es ist **dadurch gekennzeichnet, dass** es aus zwei quer länglichen Kunststoffteilen (100, 200) besteht, die so angeordnet sind, dass sie aneinander anstoßend aneinandergefügt werden können an der Außenseite der Haut (2), wobei jedes Teil (100, 200) einen inneren Seitenteil mit U-förmigem Querschnitt (140, 240) umfasst, dessen Konkavität der Haut (2) zugewandt ist, und eine Stirnfront (141, 241) umfasst, die von zwei oberen Rändern (142) begrenzt ist, 242) und unten (243) aufweist, wobei eines (100) der Teile (100, 200) ferner einen Zapfen (150) aufweist, der sich in der Verlängerung der Innenseite seines inneren Seitenabschnitts (140) erstreckt, der von dessen Innenkante nach innen zurückversetzt ist, und auf dem das innere Seitenende des inneren Seitenabschnitts (240) des anderen (200) der Teile (100, 200) so angeordnet ist, dass es sich überlappt sodass die inneren Ränder der inneren Seitenabschnitte (140, 240) dieser beiden Teile (100, 200) einander gegenüberliegen.

2. Zierkappe (1) nach Anspruch 1, **dadurch gekennzeichnet, dass** die Fassaden (141, 241) der inneren Seitenabschnitte (140, 240) der Teile (100, 200) jeweils Mittel umfassen, die es ermöglichen, eine Polierplatte (P) oder einen Träger für eine solche Polierplatte fest an diesen anzubringen, sodass die Platte (P) oder der Träger den Verbindungsbereich zwischen diesen beiden Fassaden (141, 241) bedeckt.

3. Zierkappe (1) nach Anspruch 2, **dadurch gekennzeichnet, dass** die an der Fassade (141, 241) jedes inneren Seitenabschnitts (140, 240) vorgesehenen Mittel mindestens eine Vorbohrung (160) umfassen, die von einem Befestigungselement, wie einem Niet oder einer Schraube, durchquert werden kann.

4. Zierkappe (1) nach einem der Ansprüche 2 oder 3, **dadurch gekennzeichnet, dass** die an der Fassade (141, 241) jedes inneren Seitenteils (140, 240) vorgesehenen Mittel mindestens ein Zugangsfenster (161, 261) umfassen, das es einem Befestigungselement ermöglicht, die Zierkappe (1) zu durchqueren und an der Stoßstangenhaut (2) zu befestigen.

5. Zierkappe (1) nach einem der Ansprüche 1 bis 4, **dadurch gekennzeichnet, dass** die inneren Seitenabschnitte (140, 240) der Teile (100, 200) jeweils im unteren Teil wenigstens eine Öffnung (170) aufweisen, die den Abfluss von Wasser ermöglicht, das in ihr Innenvolumen eindringen kann.

6. Zierkappe (1) nach einem der Ansprüche 1 bis 5, **dadurch gekennzeichnet, dass** jedes Teil (100, 200) mindestens eine Durchgangsöffnung (130, 230) für das Bündel eines Sensors einer Fahrhilfe aufweist.

7. Zierkappe (1) nach einem der Ansprüche 1 bis 6, **dadurch gekennzeichnet, dass** die Teile (100, 200) mit Ausnahme ihrer jeweiligen inneren Enden symmetrisch identisch zu einer vertikalen Längsebene der Symmetrie ausgebildet sind.

8. Zierkappe (1) nach einem der Ansprüche 1 bis 7, **dadurch gekennzeichnet, dass** jedes der Teile (100, 200) mehrere Laschen (110, 210) aufweist, die zum Einrasten in Schlitze vorgesehen sind, die in der Stoßstangenhaut (2) ausgebildet sind, sodass die Befestigung dieser Teile (100, 200) an der Haut (2) ermöglicht wird.

9. Kraftfahrzeug mit einer Stoßfanghaut (2) und einer Zierkappe (1) nach einem der Ansprüche 1 bis 8, die fest an der Außenseite dieser Haut (2) angebracht ist.

10. Kraftfahrzeug nach Anspruch 9, **dadurch gekennzeichnet, dass** es auch eine Polierplatte (P) oder einen Träger für eine solche Polierplatte aufweist, die fest mit einem Pferd an den Fassaden (141, 241) der inneren Seitenabschnitte (140, 240) der Teile (100, 200) angebracht ist, sodass die Platte (P) oder der Träger den Verbindungsbereich zwischen diesen beiden Fassaden (141, 241) bedeckt.

## Claims

1. Trim (1) for motor vehicle bumper skin (2) designed to rest securely against the outer face of said skin (2) so as to extend transversely along at least the major part of said skin (2) ;
wherein it is constituted by two transversely elongated plastic components (100, 200) and designed to be fixed one after the other end-to-end against the outer face of said skin (2), each said component (100, 200) comprising an inner lateral portion with a U-shaped cross-section (140, 240) whose concavity is shift towards said skin (2) and comprising a front facade (141, 241) bordered by two upper (142, 242) and lower (243) rims, one (100) of said components (100, 200) further comprising a tenon (150) extending in the inner side of its lateral portion (140), set back inwards with respect to the internal edge of the latter, and on which the internal lateral end of the internal lateral portion (240) of the other (200) of said components (100, 200) is designed to fit overlapping, so that the internal edges of the internal lateral portions (140, 240) of these two components (100, 200) are located opposite each other.

2. Trimmer (1) according to claim 1, wherein the facades (141, 241) of the inner lateral portions (140, 240) of said components (100, 200) each comprise means making it possible to attach a police plate (P) or a support for such a police plate, so that said plate (P) or said support covers the junction zone between these two facades (141, 241).

3. Trimmer (1) according to claim 2, **characterised in that** said means arranged on the facade (141, 241) of each said internal lateral portion (140, 240) comprise at least one pre-drilling (160) intended to be traversed by a fixing member such as a rivet or a screw.

4. Trim (1) according to one of Claims 2 or 3, **characterised in that** said means arranged on the front (141, 241) of each said internal lateral portion (140, 240) comprise at least one access window (161, 261) allowing a fixing member to pass through said trim (1) and to be fixed to said bumper skin (2).

5. Trimmer (1) according to one of Claims 1 to 4, **characterised in that** the inner lateral portions (140, 240) of said components (100, 200) each comprise in the lower part, at least one orifice (170) allowing the evacuation of water that can infiltrate into their inner volume.

6. Trim (1) according to one of Claims 1 to 5, **characterised in that** each said component (100, 200) has at least one passage opening (130, 230) for the beam of a sensor of a driving aid device.

7. Trim (1) according to one of Claims 1 to 6, **characterised in that** said components (100, 200) are shaped symmetrically identically with respect to a vertical longitudinal drawing of symmetry, with the exception of their respective internal ends.

8. Trimmer (1) according to one of Claims 1 to 7, **characterised in that** each of said components (100, 200) comprises several tabs (110, 210) designed to be snap-fitted into slots made in said bumper skin (2) so as to allow these components (100, 200) to be fixed to this skin (2).

9. Motor vehicle comprising a bumper skin (2) and a trim (1) according to one of Claims 1 to 8 fixed against the outer face of this skin (2).

10. Motor vehicle according to Claim 9, **characterised in that** it also comprises a police plate (P) or a support for such a police plate fixed astride against the facades (141, 241) of the internal lateral portions (140, 240) of said components (100, 200), such that said plate (P) or said support covers the junction zone between these two facades (141, 241).
